(19) Europäisches Patentamt
European Patent Office
Office européen des brevets

(11) Veröffentlichungsnummer: **0 049 365**
**B1**

(12) # EUROPÄISCHE PATENTSCHRIFT

(45) Veröffentlichungstag der Patentschrift: **08.01.86**

(51) Int. Cl.⁴: **C 07 F 7/18,** C 04 B 41/49, C 08 J 9/40

(21) Anmeldenummer: **81106892.3**

(22) Anmeldetag: **03.09.81**

(54) **Stabile wässrige Imprägnierlösungen aus hydrolysierten Alkyltrialkoxisilanen.**

(30) Priorität: **02.10.80 DE 3037220**

(43) Veröffentlichungstag der Anmeldung: **14.04.82 Patentblatt 82/15**

(45) Bekanntmachung des Hinweises auf die Patenterteilung: **08.01.86 Patentblatt 86/2**

(84) Benannte Vertragsstaaten: **AT BE CH DE FR GB IT LI LU NL SE**

(56) Entgegenhaltungen:
**CH - A - 321 107**
**DE - A - 2 336 124**
**DE - B - 1 069 057**
**GB - A - 1 358 350**

(73) Patentinhaber: **DYNAMIT NOBEL AKTIENGESELLSCHAFT, Postfach 1209, D-5210 Troisdorf, Bez. Köln (DE)**

(72) Erfinder: **Schmidt, Werner, Dr., Drachenfelsstrasse 49, D-5205 St.Augustin (DE)**

**EP 0 049 365 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind wässrige Lösungen von Silanolen, die durch Hydrolyse von Alkyltrialkoxysilanen hergestellt wurden, deren Alkoxygruppen teilweise oder vollständig hydrolysiert sind. Die Lösungen sind, je nach Herstellbedingungen, bis zu mehreren Tagen stabil. Sie eignen sich im besonderen Masse zum Hydrophobieren von anorganisch-oxidischem Material.

Es ist bekannt, dass Alkyltrialkoxysilane als Imprägniermittel für Mauerwerk, Beton oder anderem anorganisch-oxidischem Material eingesetzt werden können (DE-PS 2 029 446). Diese Alkyltrialkoxysilane sind zwar Flüssigkeiten, sie werden jedoch als verdünnte Lösungen eingesetzt, wobei die bevorzugten Lösungsmittel Alkohole sind. Lösungen in Wasser konnten bisher nicht eingesetzt werden, da die Alkyltrialkoxysilane in Wasser nur sehr wenig oder gar nicht löslich sind. Auch eine hydrolytische Abspaltung der Estergruppen führt in der Regel nicht zu einem stabilen wasserlöslichen Produkt, da unter den Bedingungen der Hydrolyse die OH-Gruppen der entstehenden Silanole so reaktionsfähig sind, dass sie sehr schnell mit anderen Hydroxylgruppen reagieren, wobei diese Hydroxylgruppen sowohl von dem anorganisch-oxidischem Material als auch von benachbarten Silanolen stammen können. Aufgrund dieser Reaktionsmöglichkeiten sind wässrige Lösungen von Alkyltrialkoxysilanen nicht stabil.

Andererseits bewirkt die Reaktionsfähigkeit der OH-Gruppen der Alkylsilanole auch eine schnelle Verankerung der Alkyltrialkoxysilane auf der anorganisch-oxidischen Oberfläche, mit der die bei der Hydrolyse intermediär entstehenden Silanole reagieren und damit einen festen Verbund zwischen Alkylsilan und der zu imprägnierenden Oberfläche ergeben. Diese Reaktion, die zu dem festen Verbund führt, kann jedoch erst nach erfolgter Hydrolyse des Alkyltrialkoxysilans erfolgen.

Alkoholische Lösungen von Alkyltrialkoxysilanen als Imprägnierungsmittel haben weiterhin den Nachteil der Brennbarkeit. Besonders beim Arbeiten in geschlossenen Räumen kann der verdunstende Alkohol leicht zu Bränden führen. Diese Nachteile durch Verwendung von Wasser anstelle des Alkohols als Lösungsmittel zu vermeiden, war wegen der Unlöslichkeit der betreffenden Alkyltrialkoxysilane in Wasser nicht möglich.

Im Falle einer hydrolytischen Spaltung im wässrigen Medium sind aber solche Lösungen wegen der Reaktivität der dabei sich bildenden Silanole nicht stabil und werden schnell trübe; diese Instabilität wässriger Lösungen von Silanolen wird durch den in manchen Anwendungsfällen notwendigen Zusatz von basischen Mitteln noch gefördert. (Vgl. US-PS 3 879 206).

Es sind zwar durch die DE-PS 1 069 057 wässrige Lösungen von Alkyltrialkoxysilanen bekannt, die auch als Imprägnierungsmittel eingesetzt werden. Hier handelt es sich aber um spezielle Silane, deren Estergruppierung Glycolester sind, die nur schwer zu hydrolysieren sind und deshalb ohne besondere Zusätze mit Wasser keine Silanole bilden. In diesen Lösungen liegen also keine Silanole vor. Auch wirken diese speziellen Silane nicht in der oben beschriebenen Weise durch Reaktion freier Hydroxylgruppen mit der Oberfläche, sondern durch Bildung eines Silikonharzes, das auf der Oberfläche einen Film bildet.

Es sind weiterhin aus der CH-PS 321 107 wässrige Lösungen von Vinylsilanolen bekannt. Hier handelt es sich jedoch um einen ungesättigten Organorest, der am Siliciumatom gebunden ist. Bei solchen Verbindungen ist die OH-Gruppe bekannterweise jedoch recht stabil.

Es bestand nun die Aufgabe, eine Imprägnierlösung auf der Basis von Alkyltrialkoxysilanen zu finden, in der diese Silane in hydrolysierter Form vorliegen, die stabil ist und die ein nicht brennbares Lösungsmittel enthält.

In Erfüllung dieser Aufgabe wurden nun stabile wässrige Lösungen von Alkyltrialkoxysilanolen der Formel

$$\begin{array}{c} R\text{-}Si(OH)_n \\ | \\ (OR')_{3-n} \end{array}$$

gefunden, in der R und R′ für Alkylreste mit 1 bis 4 C-Atomen stehen wobei R einen geradkettigen Alkylrest vorstellt und n Werte zwischen 1 und 3 annehmen kann, und die einen pH-Wert zwischen 2 und 7 aufweisen.

Es muss als überraschend angesehen werden, dass Trialkoxysilane, bei denen R und R′ die vorgenannten Reste bedeuten, sich unter bestimmten Bedingungen zu den entsprechenden wasserlöslichen Silanolen hydrolysieren lassen und dass die erhaltene wässrige Lösung dieser Silanole stabil ist. Es ist zwar bekannt, dass sich beim Mischen von Alkyltrialkoxysilanen mit angesäuertem Wasser die entsprechenden Silanole bilden; wenn keine besonderen Massnahmen getroffen werden, sind diese Lösungen aber unbeständig. Die beanspruchten Silanole bleiben jedoch in wässriger Lösung stabil, wenn ihre Herstellung bei Zimmertemperatur erfolgt und der pH-Bereich der Lösung zwischen 1,0 und 7,0, bevorzugt zwischen 2,0 und 3,5 liegt.

Je näher bei der Herstellung dieser Lösungen der pH-Wert am Neutralpunkt liegt, um so länger dauert die Herstellung der stabilen Silanollösungen. Es ist deshalb zweckmässig, bei der Herstellung einen pH-Wert von 5,0 nicht zu überschreiten. Technisch akzeptable Herstellzeiten liegen innerhalb des angegebenen bevorzugten pH-Bereichs. Die pH-Werteinstellung erfolgt bevorzugt durch starke Mineralsäuren, wie z. B. Salz- oder Schwefelsäure; es eignen sich dazu aber auch starke organische Säuren, wie z. B. Ameisensäure.

Die Herstellung erfolgt ohne Erwärmen eines Gemisches aus Alkyltrialkoxysilan und Wasser. Die Wassermenge liegt über der Menge, die für die stöchiometrische Umsetzung notwendig ist. Zweckmässigerweise stellt man die Lösung so her, dass man bezogen auf die gesamte Lösung, 0,5 bis 60 Gew.-% Alkyltrialkoxysilan einsetzt. Ein Erhitzen dieses Gemisches ist nicht notwendig, da

die Silanolbildung exotherm ist. Zur Reaktionsbeschleunigung ist es möglich, das Gemisch geringfügig zu erwärmen; dabei sollten Temperaturen über 40 °C jedoch vermieden werden.

In der erhaltenen Silanollösung ist der bei der Hydrolyse freigesetzte Alkohol noch enthalten. Er braucht nicht abdestilliert zu werden. Diese Silanollösung kann nach Bedarf noch weiter mit Wasser so weit verdünnt werden, wie es für die technischen Anwendungen notwendig ist.

Die Konzentration der Alkylsilanole in der Lösung kann zwischen 0,5 und 45 Gew.-% schwanken. Bevorzugt werden 2 bis 40 Gew.-%ige Lösungen eingesetzt.

Der Begriff «stabil» soll im Sinne der vorliegenden Erfindung bedeuten, dass sich die in Lösung befindlichen Silanole nicht spontan zu höher molekularen und in Wasser unlöslichen Siloxanen umsetzen; d.h. die Lösungen bleiben je nach Säuregrad bis über 80 Stunden trübungsfrei und können während dieser Zeitdauer wirkungsvoll zum Imprägnieren eingesetzt werden. Solche länger stehenden Lösungen können auch Oligomerisierungsprodukte der beanspruchten Silane in Lösung enthalten.

Es wäre zu erwarten gewesen, dass sich mit den neuen wässrigen Lösungen der Alkylsilanole die gleichen Materialien in eben solcher Weise hydrophobieren lassen wie mit einer alkoholischen Lösung von Propyltrialkoxysilan. Es wurde jedoch überraschend gefunden, dass die wässrige Lösung der Silanole eine sehr viel bessere hydrophobierende Wirkung zeigt als alkoholische Lösungen von z.B. Propyltrialkoxysilanen. So genügt z.B. für die Hydrophobierung von geschäumtem Chivadolimni oder Trachyglas, beides silikatische Materialien, die für Isolierzwecke Verwendung finden, bereits eine etwa 0,75%ige Silanollösung in Wasser, um eine praktisch vollständige Hydrophobierung zu erzielen, während mit einer 1%igen äthanolischen Lösung des entsprechenden Alkylsilans nur etwa eine 40%ige Hydrophobierung zu erreichen war (vgl. Beispiel 1). Bei Kalksandstein entspricht die Hydrophobierung mit einer 7,5%igen Silanollösung etwa der Wirkung einer 40%igen alkoholischen Propyltrialkoxysilanlösung (vgl. Beispiel 2). Auch poröse Klinker werden mit 1%iger wässriger Silanollösung besser hydrophobiert als mit einer 40%igen alkoholischen Propyltrialkoxysilanlösung (vgl. Beispiel 3).

Die zu hydrophobierenden Substanzen sind im allgemeinen anorganisch-oxidischer Beschaffenheit, bevorzugt silikatischer Natur, die auch aufgeschäumt sein können. Zu den hydrophobierbaren Substanzen zählen demzufolge synthetische oder natürliche Baustoffe wie Kalksandstein, Naturstein (z.B. Sandstein), Trachyt, Asbest, Asbestzement, Blähton, Beton in seinen verschiedenen Verarbeitungstypen wie z.B. Schwerbeton, Leichtbeton, Gas- und Schaumbeton, Ziegel, Dachsteine, Mörtel und Putze. Diese Materialien können auch am Ort ihrer Herstellung mit den neuen Imprägnierlösungen hydrophobiert werden, ohne dass die Gefahr von Lösungsmittelbränden oder giftigen Abgasen besteht.

Die hydrophobierende Wirkung der wässrigen Silanollösungen beschränkt sich jedoch nicht auf oben genannte oxidischsilikatische Verbindungen. Auch ein Polyvinylalkohol-Schaumstoff kann mit den neuen Alkylsilanollösungen hervorragend hydrophobiert werden (vgl. Beispiel 5).

Beispiel 1

Herstellung einer wässrigen Silanollösung:

50 g Propyltrimethoxysilan werden mit 50 g Wasser gemischt, dem 3 Tropfen 1%iger HCl zugesetzt waren. Unter Rühren bei Zimmertemperatur hydrolysiert das Silan innerhalb von 10 bis 15 Minuten unter schwacher Erwärmung und bildet eine klare Lösung von theoretisch 37 g Silantriol. Die Lösung bleibt bis zum Beginn einer Trübung mindestens drei Tage lang stabil. Sie lässt sich mit beliebigen Mengen Wasser verdünnen, um die für den jeweiligen technischen Verwendungszweck erwünschte Silankonzentration zu erhalten.

Verwendet man statt Propyltrimethoxysilan die entsprechende Äthoxyverbindung, so ergeben sich etwa die gleichen Fakten. Die wässrige Lösung enthält dann theoretisch 29 g Silantriol.

Beispiel 2

Hydrophobieren von expandiertem Chivadolimni:

Je 100 g des Minerals Chivadolimni mit einer Körngrösse von 0,5 bis 2,5 mm Durchmesser und einem spezifischen Gewicht von 2400 kg/m³ wurden mit je 200 g der unter b–d genannten Hydrophobierlösung innig gemischt und anschliessend 2 Stunden bei 120 °C getrocknet. In ein senkrecht stehendes Rohr von 5 cm lichter Weite, das unten mit einem Sieb verschlossen ist, wurde das so vorbehandelte Material in einer Schichthöhe von 24,6 cm eingefüllt und gewogen. Die Füllung wurde oben mit einem Stempel festgehalten. Dann wurde das Rohr bis über die Füllgrenze 15 Minuten lang in Wasser von Zimmertemperatur getaucht, anschliessend herausgenommen, 5 min. lang in 45° Neigung abtropfen gelassen und ausgewogen. Die Gewichtsdifferenz des gefüllten Rohres vor und nach dem Tauchen ist ein Mass für die Hydrophobierung. Angegeben werden Gew.-% Wasseraufnahme, bezogen auf das Trockengewicht des eingesetzten Minerals.

Tabelle 1

| Behandlungsmittel | Wasseraufnahme |
|---|---|
| a) unbehandelt | 265% |
| b) Äthanol | 236% |
| c) PTMO, Gew.-% gelöst in Äthanol | 168% |
| d) Propylsilanol, 1 Gew.-%, gelöst in Wasser | 71% |

35 PTMO = Propyltrimethoxysilan.

Wie ein Blindversuch mit wassergesättigtem Mineral zeigte, betrug die im gefüllten Rohr mechanisch anhaftende Wassermenge jeweils über 50%, die bei allen genannten Werten abgezogen

werden muss, so dass die Hydrophobierung nach d) praktisch vollständig war.

Die Messung mit c) wurde auch nach 16-tägiger Lagerzeit des silanisierten Materials durchgeführt. Das Ergebnis blieb das gleiche.

Beispiel 3
Imprägnieren von Kalksandstein:

Ein Kalksandstein wurde 1 Minute lang in die in der Tabelle 2 genannten Prüflösungen getaucht, anschliessend 7 Tage lang an der Luft bei Zimmertemperatur trocknen gelassen, ausgewogen und dann bis zu 1 cm in Wasser eintauchend hohl gelagert. Bei dem so gelagerten Stein wurde die aufgenommende Wassermenge von Zeit zu Zeit ausgewogen.

Tabelle 2

| Imprägnierlösung | Lagerzeit in Wasser | % Wasseraufnahme |
|---|---|---|
| a) Wasser | 1 Tag | 11,5 |
| | 5 Tage | 11,8 |
| | 10 Tage | 12,2 |
| b) wässriges Hydrolysat aus 10% PTMO | 1 Tag | 0,3 |
| | 5 Tage | 1,0 |
| | 10 Tage | 0,4 |
| c) alkoholische Lösung von 40% PTMO | 1 Tag | 0,4 |
| | 5 Tage | 1,0 |
| | 10 Tage | 1,1 |

PTMO = Propyltrimethoxysilan.

Aus der Tabelle geht hervor, dass eine mit 10% PTMO hergestellte Silanollösung ebenso gut hydrophobierend wirkt wie eine 40%ige alkoholische Lösung des analogen Trimethoxisilans.

Beispiel 4
Hydrophobieren von Klinker:

Gebrannte poröse Klinker, sogenannte Zippa-Klinker, wurden wie in Beispiel 2 1 Minute lang in die in Tabelle 3 genannte Prüflösung getaucht. Nach dem Trocknen wurde ausgewogen. Die gewogenen Steine wurden so in Wasser gelegt, dass das Wasser noch 1 cm über der obersten Steinfläche überstand. Bei den so gelagerten Steinen wurde die aufgenommene Wassermenge von Zeit zu Zeit ausgewogen.

Tabelle 3

| Imprägnierlösung | Lagerzeit in Wasser | % Wasseraufnahme |
|---|---|---|
| a) Wasser | 1 Tag | 6,5 |
| | 5 Tage | 1,8 |
| | 10 Tage | 7,6 |
| b) wässriges Hydrolysat aus 0,5% PTMO | 1 Tag | 1,3 |
| | 5 5 Tag | 1,8 |
| | 10 Tage | 2,0 |
| c) wässriges Hdrolysat aus 1,0 % PTMO | 1 Tag | 0.6 |
| | 5 Tage | 0,8 |
| | 10 Tage | 1,0 |
| d) äthanolische Lösung von 40% PTMO | 1 Tag | 0,2 |
| | 5 Tage | 0,4 |
| | 10 Tage | 1,4 |

PTMO = Propyltrimethoxysilan.

Über einen Zeitraum von 10 Tagen betrachtet, ist hier eine wässrige Silanollösung aus 1% PTMO einer 40%igen alkoholischen Silanlösung bereits überlegen.

Beispiel 5
Hydrophobieren von Kugeln aus Blähton:

Die z.B. als Zuschlagstoffe für Beton verwendeten Blähtonkugeln haben einen Durchmesser von

4 bis 8 mm, sind porös und sehr saugfähig. Zur Hydrophobierung wurden Proben dieser Kugeln mit einer Imprägnierlösung innig vermischt, die jeweils 10% des Eigengewichts der Kugeln entsprach. Diese Lösungsmenge wurde von den Kugeln ganz aufgenommen. Anschliessend wurden die Kugeln 2 Stunden bei 110 °C getrocknet und nach dem Erkalten in ausgewogenen Portionen unter Wasser gelagert. Von Zeit zu Zeit wurde die Wasseraufnahme der Kugeln bestimmt.

Tabelle 4

| Imprägnierlösung | Lagerzeit in Wasser | % Wasseraufnahme |
|---|---|---|
| a) Wasser | 1 Tag | 18 |
| | 3 Tage | 22 |
| | 6 Tage | 27 |
| b) wässriges Hydrolysat aus 0,1% PTMO | 1 Tag | 4 |
| | 3 Tage | 6 |
| | 6 Tage | 11 |
| c) wässriges Hydrolysat aus 2,0% PTMO | 1 Tag | 3 |
| | 3 Tage | 4 |
| | 6 Tage | 8 |
| d) wässriges Hydrolysat aus 4,0% PTMO | 1 Tag | 1 |
| | 3 Tage | 2 |
| | 6 Tage | 4 |
| e) äthanolische Lösung von 0,5% PTMO | 1 Tag | 4 |
| | 3 Tage | 10 |
| | 6 Tage | 15 |
| f) äthanolische Lösung von 0,5% IBTMO | 1 Tag | 6 |
| | 3 Tage | 12 |
| | 6 Tage | 17 |
| g) äthanolische Lösung von 4,0% IBTMO | 1 Tag | 6 |
| | 3 Tage | 10 |
| | 6 Tage | 13 |

PTMO = Propyltrimethoxysilan
IBTMO = Isobutyltrimethoxysilan.

Die in der Tabelle angegebenen Prozentzahlen für den Gehalt an Wirkstoff beziehen sich jeweils auf das Gewicht der Kugeln.

Aus der Tabelle ist ersichtlich, dass der Effekt einer wässrigen Silanollösung aus 0,1% PTMO von alkoholischen Silanlösungen auch in 5 bis 40-facher Konzentration nicht erreicht werden kann.

Beispiel 6
Hydrophobieren von Schaumstoff:

Eine 5 mm dicke Polyvinylacetat-Schaumstoffplatte wurde in Streifen von 5 × 17 cm Grösse geschnitten. Tauchte man einen solchen Streifen von etwa 14 g Gewicht 15 Minuten lang in kaltes Wasser, so nahm er etwa 200% seines Trockengewichts an Wasser auf. Dieser Vorgang war reversibel.

Enthielt das Wasser jedoch ein Hydrolysat aus 2,5% PTMO, so war der Vorgang nicht mehr reversibel. Nach dem Trocknen betrug die Wasseraufnahme des Schaumstoffstreifens nach 15 Minuten Tauchen dann nur noch 15%, nach 30 Minuten 19%. Ein Vergleichsversuch mit einer äthanolischen Lösung von 2,5% Isobutyltrimethoxysilan ergab als Effekt der Hydrophobierung eine resultierende Wasseraufnahme von 80 bis 93%.

**Patentansprüche**

1. Wässrige, einen pH-Wert zwischen 2 und 7 aufweisende Lösungen von Alkylsilanolen der Formel

$$\begin{array}{c} R\text{-}Si(OH)_n \\ | \\ (OR')_{3-n} \end{array}$$

in der R und R′ für Alkylreste mit 1 bis 4 C-Atomen stehen wobei R einen geradkettigen Alkylrest vorstellt und n Werte zwischen 1 und 3 annehmen kann.

2. Wässrige Alkylsilanol-Lösungen gemäss Anspruch 1, dadurch gekennzeichnet, dass R für den Rest $CH_3\text{–}CH_2\text{–}CH_2\text{–}$ steht.

3. Wässrige Lösungen gemäss Anspruch 1 oder 2, gekennzeichnet durch einen Gehalt an 0,5 bis

45 Gew.-%, bevorzugt 2 bis 40 Gew.-%, an Alkylsilanolen.

4. Verwendung der wässrigen Lösungen gemäss einem der Ansprüche 1 bis 3 zur hydrophobierenden Imprägnierung von anorganisch-oxidischem Material.

5. Verwendung der wässrigen Lösungen gemäss Anspruch 4 zu Hydrophobierung von Baumaterialien aus anorganischoxidischem Material.

6. Verwendung der wässrigen Lösungen gemäss einem der Ansprüche 1 bis 3 zur hydrophobierenden Imprägnierung von verschäumtem Polyvinylalkohol.

7. Verwendung der wässrigen Lösungen gemäss einem der Ansprüche 1 bis 3 zu Tarnimprägnierungen.

**Claims**

1. Aqueous solutions possessing a pH value between 2 and 7 of alkyl silanols of the formula

$$\begin{array}{c} R{-}Si(OH)_n \\ | \\ (OR')_{3-n} \end{array}$$

in which R and R′ stand for alkyl residues with 1 to 4 C-atoms, wherein R represents a straight-chained alkyl residue, and n can assume values between 1 and 3.

2. Aqueous alkyl silanol solutions according to claim 1, characterised in that R stands for the residue $CH_3{-}CH_2{-}CH_2{-}$.

3. Aqueous solutions according to claim 1 or 2, characterised by an alkyl silanol content of 0.5 to 45% by weight, preferably 2 to 40% by weight.

4. Use of the aqueous solutions according to one of claims 1 to 3 for hydrophobizing impregnation of inorganic-oxidic material.

5. Use of the aqueous solutions according to claim 4 for the hydrophobizing of building materials formed from inorganic oxidic material.

6. Use of the aqueous solutions according to one of claims 1 to 3, for hydrophobizing impregnation of foamed polyvinyl alcohol.

7. Use of the aqueous solutions according to one of claims 1 to 3 for camouflage impregnations.

**Revendications**

1. Solutions aqueuses d'alkylsilanols d'un pH compris entre 2 et 7 répondant à la formule

$$\begin{array}{c} R{-}Si(OH)_n \\ | \\ (OR')_{3-n} \end{array}$$

dans laquelle R et R′ sont des radicaux alkyles de 1 à 4 atomes de C, R représentant un radical alkyl à chaîne droite, et n peut prendre des valeurs comprises entre 1 et 3.

2. Solutions aqueuses d'alkylsilanols selon la revendication 1, caractérisées en ce que R est le radical $CH_3{-}CH_2{-}CH_2{-}$.

3. Solutions aqueuses selon la revendication 1 ou 2, caractérisées par une teneur en alkylsilanols de 0,5 à 45% en poids, de préférence de 2 à 40% en poids.

4. Utilisation des solutions aqueuses selon l'une des revendications 1 à 3 pour l'imprégnation d'imperméabilisation d'un matériau inorganique sous forme d'oxyde.

5. Utilisation des solutions aqueuses selon la revendication 4 pour l'hydrofugation de matériaux de construction en matériau inorganique sous forme d'oxyde.

6. Utilisation des solutions aqueuses selon l'une des revendications 1 à 3 pour l' imprégnation imperméabilisante de poly (alcool vinylique) mousse.

7. Utilisation des solutions aqueuses selon l'une des revendications 1 à 3 pour des imprégnations de camouflage.